# NEW EUROPEAN PATENT SPECIFICATION

(11) **EP 0 230 804 B2**
(45) Date of publication and mention of the opposition decision: **17.05.2000**
(45) Mention of the grant of the patent: 13.06.1990
(21) Application number: 86402654.7
(22) Date of filing: 28.11.1986
(51) Int. Cl.: F16J 15/08

(54) **Metallic gasket**
Metalldichtung
Joint d'étanchéité métallique

(30) Priority: 27.12.1985 JP 29289385; 27.12.1985 JP 29289485
(43) Date of publication of application: 05.08.1987
(73) Proprietor: NIHON METAL GASKET KABUSHIKI KAISHA, Kumagaya-shi Saitama-ken (JP)
(72) Inventor: Yoshino, Nobuo, Kumagaya-shi Saitama-ken (JP); Ueta, Kosaku, Urawa-shi Saitama-ken (JP)
(74) Representative: Röhl, Wolf Horst, Dipl.-Phys., Dr.

(56) References cited:
- DE-A- 2 220 536
- DE-C- 2 849 018
- GB-A- 2 115 503
- JP-U- 60 170 053
- US-A- 1 982 759
- US-A- 4 468 044

## Description

### BACKGROUND OF THE INVENTION

### Field of the Invention

The present invention relates to a metallic gasket and, more particularly, to a metallic gasket in which a gap between the deck surfaces around a combustion chamber which is caused when a cylinder head is fastened can be compensated and the increase and decrease in the deck surface gap due to influences of a combustion gas pressure and an engine heat can be prevented, thereby enabling the stable and effective sealing performance to be accomplished.

The invention further relates to a metallic gasket in which a spring constant at a location away from the bolt fastening position is set to a large value and a uniform sealing pressure is applied to the sealing portion and at the same time, the increase and decrease in the deck surface gap can be prevented and the stable and effective sealing performance can be attained.

### Description of the Prior Art

A metallic gasket is used in the joint area between the cylinder head and the cylinder block constituting an internal combustion engine. The metallic gasket has one or a plurality of beads which are formed so as to seal the deck surfaces between the cylinder head and the cylinder block. These beads form elastic sealing lines on the deck surfaces due to the fastening forces of fastening means such as bolts or the like for joining the members to be joined, thereby providing the sealing performance.

However, when the cylinder head is fastened to the cylinder block through the metallic gasket by the fastening bolts, the cylinder head is curved due to the bolt fastening forces and, particularly, the gap between the cylinder head and the cylinder block around the combustion chamber increases, so that distortions occur. Thus, there are the problems such that the combustion gas leaks from the positions where those distortions occurred and the metallic gasket interposed in the joint area is polluted, and the sealing performance deteriorates due to the deposition of the material contained. In addition, when the combustion engine operates, the gap between the deck surfaces around the combustion chamber increases or decreases due to influences of, e.g., the combustion gas pressure and engine heat, so that the fatigue occurs in the beads of the metallic gasket due to the alternate load. This alternate load also acts on the fastening bolts and causes the bolts and cylinder head portions with which the bolts are come into engagement to be damaged. Further, there are the problems such that the fastening forces of the bolts are reduced and the sealing effect of the metallic gasket deteriorates.

On one hand, when the cylinder head is fastened to the cylinder block through the metallic gasket by the fastening bolts, the surface pressures of the portions where the bolts are fastened and of the portions away from the fastening portions differ and the surface pressures at the remote positions are lower than those of the bolt fastening portions. Similarly, the sealing pressures at the remote positions are also lower than those of the bolt fastening portions. Thus, there is the drawback such that the combustion gas is likely to leak.

As a method of solving those drawbacks, the method whereby the bolt fastening forces are enlarged is considered. However, the surface pressures of the bolt fastening portions contrarily increase than they are needed, so that there is the fear such that the deck surfaces are damaged by the beads. Therefore, it is improper to increase the bolt fastening forces than they are needed.

DE-A 2 220 536 shows a metallic gasket having a combustion chamber hole, a plate with a folded edge and a base plate with a bead,

GB-A 2 115 503 relates to a gasket having a metal plate and a corrugation with a double wave form, said gasket is provided with a support such as a shim.

### SUMMARY OF THE INVENTION

It is the first object of the present invention to solve the foregoing drawbacks and provide a metallic gasket in which the gap between the deck surfaces around the combustion chamber which is caused when the cylinder head is fastened can be compensated by the compensating portion and the pollution of the metallic gasket and the deterioration of the sealing effect can be prevented, thereby enabling the stable and effective sealing performance to be accomplished.

It is the second object of the invention to solve the foregoing drawbacks and provide a metallic gasket in which the uniform sealing pressure is given to the sealing portions and the gap between the deck surfaces around the combustion chamber is compensated by the compensating portion, thereby enabling the sealing performance to be improved.

To accomplish these objects, an inventive metallic gasket comprises the features as defined in claim 1.

By this the increase and decrease in the gap between the deck surfaces is prevented.

With this constitution of the invention, the compensating portion of a predetermined thickness is formed on the side of the combustion chamber hole where the bead is formed so as to surround the combustion chamber hole. By this compensating portion, the gap between the deck surfaces which is caused when the cylinder head is fastened is compensated. Due to this, the large deck surface gap around the combustion chamber is compensated so as to prevent the increase and decrease of the gap between the deck surfaces due to influences of the combustion gas pressure and engine heat. The action of the alternate load on the bead is weakened. In this manner, the fatigue of the bead is prevented. In addition, by laminating the base plate formed with a bead onto at least one of the laminated compensating and intermediate plates, a recovery amount and a recovery force of the bead are increased, thereby enabling the sealing performance to be improved.

The above and other objects, features, and advantages of the present invention will be more apparent from the following detailed description in conjunction with the accompanying drawings.

### BRIEF DESCRIPTION OF THE DRAWINGS

Fig. 1 is a plan view of a metallic gasket in an embodiment of the present invention;
Fig. 2 is an enlarged cross sectional view showing the main part taken along the line II-II in Fig. 1;
Fig. 3 is a cross sectional view showing the main part with a part omitted in the case where the metallic gasket shown in Figs. 1 and 2 is interposed in a joint area;
Fig. 4 is an enlarged cross sectional view showing the main part of a metallic gasket in the second embodiment of the invention:
Fig. 5 is an enlarged cross sectional view showing the main part of a metallic gasket in the third embodiment of the invention;

### DETAILED DESCRIPTION OF THE PREFERRED EMBODIMENTS

Embodiments of the present invention will now be practically described in detail hereinbelow with reference to the drawings.

In the drawings, the similar or corresponding parts and components are designated by the same reference numerals and described.

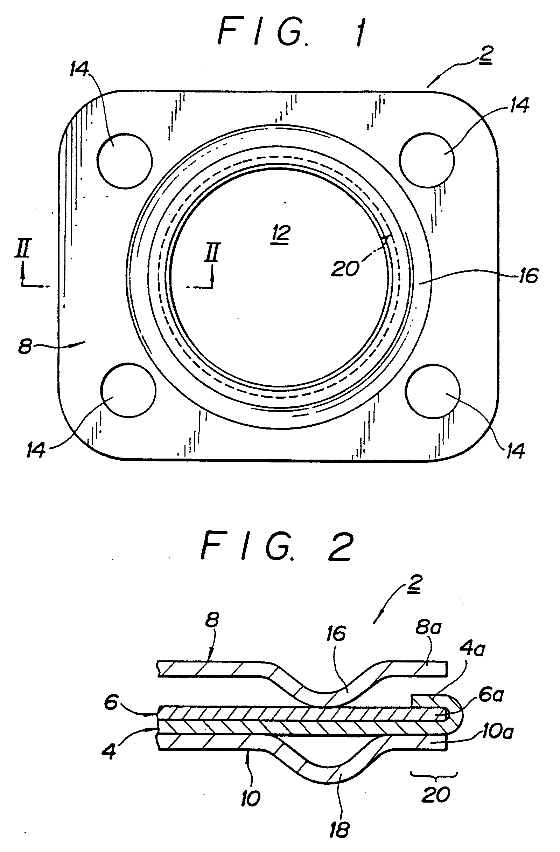

Figs. 1 to 3 illustrate the first embodiment of the invention, in which a metallic gasket 2 is composed of a compensating plate 4, an intermediate plate 6, and first and second base plates 8 and 10 consisting of elastic metal plates. A combustion chamber hole 12 is formed in the compensating plate 4. A plurality of (in this example, four) bolt holes 14 are formed in the plate 4 around the combustion chamber hole 12. The intermediate plate 6 is laminated onto the compensating plate 4. An edge 4a of the compensating plate 4 on the side of the combustion chamber hole 12 is folded back due to a bending work or the like so as to sandwich an edge 6a of the intermediate plate 6.

Next, the first and second base plates 8 and 10 are arranged on both sides of the laminated compensating plate 4 and intermediate plate 6 so as to sandwich them. Namely, the first base plate 8 which is substantially circumferentially formed with a first bead 16 so as to surround the edge 4a is laminated onto the upper surface of the intermediate plate 6 where the edge 4a of the compensating plate 4 is laid on the edge 6a of the plate 6. In this case, the first bead 16 of the first base plate 8 is downwardly located. The summit of the first bead 16 is come into contact with the upper surface of the intermediate plate 6 and a first edge 8a of the first base plate 8 on the side of the combustion chamber hole 12 is located above the edge 4a. On one hand, the second base plate 10 which is similarly almost circumferentially formed with a second bead 18 is laminated on the lower surface of the compensating plate 4. The second base plate 10 has substantially the same shape as the first base plate 8. The summit of the second bead 18 is formed in the same direction (i.e., downwardly in this example) and at the same position as the summit of the first bead 16 of the first base plate 8. A second edge 10a of the second base plate 10 on the side of the combustion chamber hole 12 is located below the folded edge 4a of the compensating plate 4 so as to be come into contact with the lower surface of the plate 4. Thus, a compensating portion 20 having a predetermined thickness is formed around the combustion chamber hole 12 by the compensating plate 4, edge 6a of the intermediate plate 6, edge 4a of the plate 4, first edge 8a of the first base plate 8, second edge 10a of the second base plate 10, and gap which is produced between the edges 4a and 8a. The compensating portion 20 is formed thicker than the other portion when the metallic gasket is fastened. Consequently, the gap between the deck surfaces around the combustion chamber 28 is compensated and the increase and decrease in the gap between the deck surfaces are prevented.

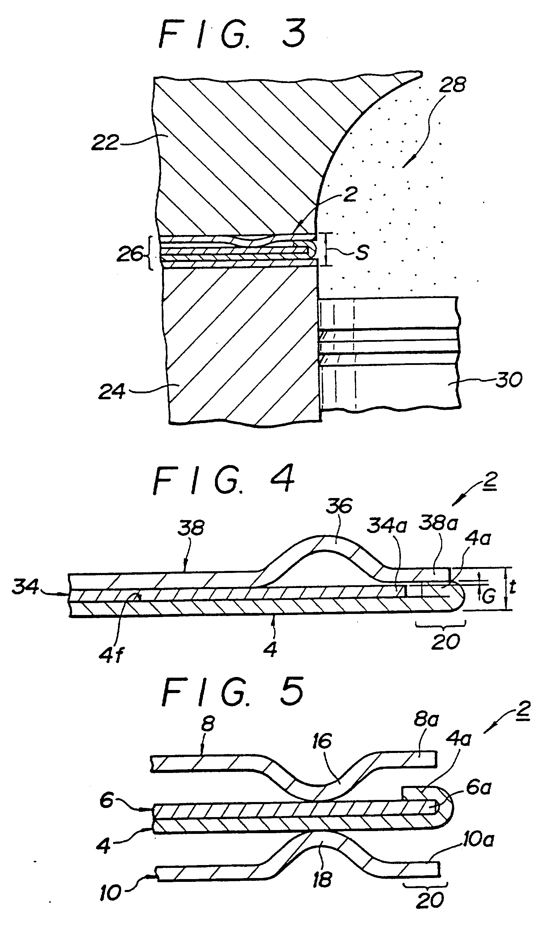

Referring now to Fig. 3, a cylinder head 22 and a cylinder block 24 constitute an internal combustion engine. The above-mentioned metallic gasket 2 of the invention is interposed in a joint area 26 between the deck surfaces of the cylinder head 22 and cylinder block 24 and fastened by fastening bolts (not shown). In Fig. 3, reference numeral 28 denotes a combustion chamber; 30 a piston; and S a gap between the deck surfaces of the cylinder head 22 and cylinder block 24 on the side of the combustion chamber 28.

The operation of the first embodiment will now be described.

The metallic gasket 2 interposed in the joint area 26 between the cylinder head 22 and the cylinder block 24 is compressed due to the bolt fastening forces, so that the heights of the first and second beads 16 and 18 are reduced and the first and second beads are compressed and deformed. Due to this deformation, the first and second beads 16 and 18 are come into pressure contact with the deck surfaces of the cylinder head 22 and cylinder block 24 with predetermined surface pressures, thereby providing the sealing effect. When the metallic gasket is fastened by the bolts, as shown in Fig. 3, the cylinder head 22 is curved and deformed and a distortion occurs in this portion. Particularly, there is the problem such that the gap S between the deck surfaces around the combustion chamber 28 is enlarged. However, as mentioned above, by providing the compensating portion 20 having a predetermined thickness on the side of the combustion chamber hole 12 rather than the sides of the bead portions, the large gap S which is caused due to the distortion of the cylinder head 22 can be compensated due to the thickness of the compensating portion 20.

With this constitution, the leakage of the combustion gas from the gap S can be prevented. In addition, the increase and decrease of the gap between the deck surfaces due to the influences of the combustion gap pressure and engine heat can be prevented. The alternate load which acts on the first and second beads 16 and 18 is weakened by the compensating portion 20, thereby preventing the fatigues of the first and second beads 16 and 18. It is also possible to prevent that the fastening bolts and the portions of the cylinder head 22 with which the bolts are come into engagement are damaged and at the same time, the reduction in fastening forces of the bolts can be prevented. Thus, the deterioration in sealing effect can be prevented.

According to the first embodiment, on one hand, since the first and second base plates 8 and 10 are provided so as to sandwich the laminated compensating plate 4 and intermediate plate 6, recovery amounts and recovery forces of the bead portions are increased, thereby allowing the sealing effect of the bead portions to be improved. Since the portion around the combustion chamber 28 is sealed at two positions of the compensating portion 20 and sealing portion, the further high sealing effect can be derived and the leakage of the combustion gas is effectively prevented.

The second embodiment of the invention will now be briefly described with reference to Fig. 4.

Features of the second embodiment are as follows. The edge 4a of the compensating plate 4 on the side of the combustion chamber hole 12 is folded back to the side of an upper surface 4f of the plate 4 in the direction opposite to the combustion chamber hole 12. An intermediate plate 34 having a thickness which is slightly thinner than that of the compensating plate 4 is laminated onto the upper surface 4f. In this case, the intermediate plate 34 is arranged such that there is a space between an edge 34a of the plate 34 and the folded edge 4a of the plate 4. A base plate 38 formed with a bead 36 is mounted on the upper surface of the intermediate plate 34 in a manner such that the summit of the bead 36 is directed on the side of the deck surface of the cylinder head 22 (namely, upwardly in the diagram) and an edge 38a of the base plate 38 overlaps the edge 4a in contact relation therewith. Thus, the compensating portion 20 having a predetermined thickness t is formed around the combustion chamber hole 12 by the compensating plate 4, folded edge 4a thereof, and edge 38a of the base plate 38. It should be noted that a slight gap G is produced between the side of the upper surface of the edge 34a of the intermediate plate 34 and the side of the lower surface of the base plate 38. The gap G is equal to the difference between the thicknesses of the edges 34a and 4a.

With the constitution of the second embodiment, when the metallic gasket is fastened by the bolts, the bead 36 is compressed and deformed, so that its height is reduced. Due to this deformation, the edge 34a of the intermediate plate 34 is come into contact with the base plate 38 and the gap G is eliminated. In this state, the thickness of the compensating portion 20 is obviously larger than that of the other laminated structure portion consisting of the plates 4, 34, and 38. Thus, the large gap S which is caused due to the distortion of the deck surface can be compensated. The metallic gasket of the second embodiment has many advantages such that the structure is simple, it can be easily manufactured, the material cost and manufacturing cost can be reduced, the life of the gasket is prolonged, and the like.

The third embodiment of the invention will now be briefly described with reference to Fig. 5. In a manner similar to the first embodiment of Fig. 2 explained above, the first and second base plates 8 and 10 are laminated on both sides of the laminated intermediate plate 6 and compensating plate 4. However, in this case, different from the first embodiment, the first and second base plates 8 and 10 are arranged such that the first and second beads 16 and 18 are formed in the opposite direction so as to face each other. Namely, the summits of the first and second beads 16 and 18 are come into contact with the upper surface of the intermediate plate 6 and the lower surface of the compensating plate 4 so as to be symmetrical with respect to the laminated structure of the plates 4 and 6. With this constitution, since only the summits of the first and second beads 16 and 18 are come into contact with the plates 6 and 4, the recovery amounts and recovery forces of the beads are further increased and the sealing surface pressures can be raised. Also, even if distortions occur as well, these beads can smoothly follow and keep the sealing surface pressures constant. The sealing effect can be further improved.

As will be obvious from the above detailed description, according to the first to third embodiments, by providing the compensating portion of a predetermined thickness to compensate the gap between the deck surfaces around the combustion chamber hole which is caused when the cylinder head is fastened, the increase and decrease in this gap due to the influence of the combustion gas pressure and engine heat can be prevented. Thus, the leakage of the combustion gas from the portion around the combustion chamber can be prevented. In addition, the pollution of the metallic gasket due to the leaked combustion gas and the deterioration of the sealing effect due to the deposition of the material contained can be prevented. Moreover, the alternate load which acts on the beads is weakened and the fatigues of the beads are prevented and the life of the gasket is prolonged. The damages of the fastening bolts and cylinder head portions with which the bolts are come into engagement can be prevented. The reduction of the fastening forces of the bolts can be prevented. Thus, the stable sealing effect can be derived.

By laminating the base plate having a bead onto at least one of the laminated compensating plate and intermediate plate, the recovery amount and recovery force of the bead are increased, thereby enabling the sealing performance to be improved.

## Claims

1. A metallic gasket comprising a laminated structure of plates being provided with a combustion chamber hole (12), said structure having a flat elastic metal base plate (8, 38) provided with one full bead (16, 36) adjacent to its edge portion (8a, 38a) surrounding said combustion chamber hole (12), a flat compensating plate (4), a compensating means (20) extending around said combustion chamber hole (12), thicker in wall thickness than the other portion when the metallic gasket is fastened, being formed by folding back the edge (4a) of said compensating plate (4) adjacent to said combustion chamber hole (12) in a direction opposite to said hole (12), and a flat intermediate plate (6),
**characterized** in that
the intermediate plate (6, 34) which is placed between said base plate (8, 38) and said compensating plate (4) is laminated onto said compensating plate (4),
said compensating means (20) comprises the compensating plate (4), the folded edge thereof (4a) and the edge portion (8a, 38a) of said base plate (8, 38), said folded edge (4a) being folded back so that it is in complete contact with said compensating plate (4) or said intermediate plate (6, 34), already before being fastened,
said base plate (8, 38) is an outer plate, said edge portion (8a, 38a) not being covered by the folded edge (4a) of the compensating plate (4), and
said bead (16, 36) of said base plate (8, 38) is disposed outside of the compensating means (20).

2. A metallic gasket according to claim 1, characterized in that said folded edge (4a) of the compensating plate (4) is laid on the edge on the side of the combustion chamber hole (12) of said intermediate plate (6).

3. A metallic gasket according to claims 1 or 2, characterized in that the base plate (8) is laminated onto the intermediate plate (6) such that the edge (8a) of said base plate (8) is arranged over said folded edge and the head (16) is come into contact with the intermediate plate (6).

4. A metallic gasket according to any one of claims 1 to 3, characterized in that it is provided with a second base plate (10) having a second bead (18) which is laminated onto the compensating plate (4), and the beads (16, 18) of the base plates (8, 10) are formed in the same direction.

5. A metallic gasket according to any one of claims 1 to 3, characterized in that it is provided with a second base plate (10) having a second bead (18) which is laminated onto the compensating plate (4), and said beads (16, 18) of said base plates (8, 10) are formed in opposite directions, and the summits of said beads (16, 18) are in contact with said intermediate plate (6) and said compensating plate (4), so as to sandwich said laminated intermediate and compensating plates (4, 6).

6. A metallic gasket according to any one of claims 1 to 5, characterized in that the compensating means (20) is constituted by the compensating plate (4), the folded edge thereof (4a), the edge (6a) of said intermediate plate (6), and the edges of said base plates (8, 10).

7. A metallic gasket according to any one of claims 1 to 6, characterized in that a thickness of said intermediate plate (6) is smaller than that of said compensating plate (4), the base plate (8) is laminated onto said intermediate plate (6) and said folded edge (4a) of the compensating plate (4), so that the bead (16) is directed in the direction opposite to the intermediate plate (6), the edge on the side of the combustion chamber hole (12) of said intermediate plate (6) is away from said folded edge, and there is a slight gap between the upper surface of said edge of the intermediate plate (6) and the lower surface of the edge portion on the side of the combustion chamber hole (12) of said base plate (8).

## Patentansprüche

1. Metallische Dichtung, umfassend eine geschichtete Struktur von Platten, die mit einer Brennkammeröffnung (12) versehen ist, wobei diese Struktur eine flache, elastische Metallgrundplatte (8, 38), die mit einer Vollsicke (16, 36) benachbart zu ihrem die Brennkammeröffnung (12) umgebenden Randbereich (8a, 38a) versehen ist, eine flache Ausgleichsplatte (4), ein sich um die Brennkammeröffnung (12) erstreckendes Kompensationsmittel (20), das in der Wandstärke dicker als der andere Abschnitt ist, wenn die metallische Dichtung eingespannt ist, und durch Zurückfalzen des der Brennkammeröffnung (12) benachbarten Randes (4a) der Ausgleichsplatte (4) in einer zu deren Öffnung (12) entgegengesetzter Richtung gebildet ist, sowie eine flache Zwischenplatte (6) umfaßt,
**dadurch gekennzeichnet**, daß
- die Zwischenplatte (6, 34), die zwischen der Grundplatte (8, 38) und der Ausgleichsplatte (4) angeordnet ist, auf die Ausgleichsplatte (4) geschichtet ist,
- das Kompensationsmittel (20) die Ausgleichsplatte (4), deren umgefalzten Rand (4a) und den Randabschnitt (8a, 38a) der Grundplatte (8, 38) umfaßt, wobei der umgefalzte Rand (4a) so zurückgefalzt ist, daß er bereits vor dem Einspannen in vollständigem Kontakt mit der Ausgleichsplatte (4) oder mit der Zwischenplatte (6, 34) ist,
- die Grundplatte (8, 38) eine äußere Platte ist, wobei der Randabschnitt (8a, 38a) nicht durch den gefalzten Rand (4a) der Ausgleichsplatte (4) bedeckt ist, und
- die Sicke (16, 36) der Grundplatte (8, 38) außerhalb des Kompensationsmittels (20) angeordnet ist.

2. Metalldichtung gemäß Anspruch 1, dadurch gekennzeichnet, daß besagter umgefalzter Rand (4a) der Ausgleichsplatte (4) auf den Rand an der Seite der Brennkammeröffnung (12) besagter Zwischenplatte (6) gelegt ist.

3. Metalldichtung gemäß Anspruch 1 oder 2, dadurch gekennzeichnet, daß die Grundplatte (8) auf die Zwischenplatte (6) geschichtet ist, so daß der Rand (8a) besagter Grundplatte (8) über besagtem umgefalzten Rand angeordnet ist und die Sicke (16) mit der Zwischenplatte (6) in Kontakt steht.

4. Metalldichtung gemäß einem der Ansprüche 1 bis 3, dadurch gekennzeichnet, daß sie mit einer zweiten Grundplatte (10) versehen ist, die eine zweite Sicke (18) besitzt und auf die Ausgleichsplatte (4) geschichtet ist, und die Sicken (16, 18) der Grundplatten (8, 10) in die gleiche Richtung geformt sind.

5. Metalldichtung gemäß einem der Ansprüche 1 bis 3, dadurch gekennzeichnet, daß sie mit einer zweiten Grundplatte (10) versehen ist, die eine zweite Sicke (18) besitzt und auf die Ausgleichsplatte (4) geschichtet ist, und besagte Sicken (16, 18) besagter Grundplatten (8, 10) in entgegengesetzte Richtungen ausgeformt sind und die Scheitel besagter Sicken (16, 18) mit besagter Zwischenplatte (6) und besagter Ausgleichsplatte (4) in Kontakt kommen, so daß die Zwischen- und Ausgleichsplatten (4, 6) hierzwischen angeordnet sind.

6. Metalldichtung gemäß einem der Ansprüche 1 bis 5, dadurch gekennzeichnet, daß der Kompensationsabschnitt (20) durch die Ausgleichsplatte (4), den umgefalzten Rand (4a) hiervon, den Rand (6a) besagter Zwischenplatte (6) und die Ränder besagter Grundplatten (8, 10) gebildet wird.

7. Metalldichtung gemäß einem der Ansprüche 1 bis 6, dadurch gekennzeichnet, daß besagte Zwischenplatte (6) eine geringere Dicke als besagte Ausgleichsplatte (4) aufweist, die Grundplatte (8) auf besagte Zwischenplatte (6) und besagten umgefalzten Rand (4a) der Ausgleichsplatte (4) geschichtet ist, so daß die Sicke (16) in die Richtung entgegengesetzt zur Zwischenplatte (6) gerichtet ist, der Rand an der Seite der Brennkammeröffnung (12) besagter Zwischenplatte (6) von besagtem umgefalzten Rand entfernt ist und es einen geringen Spalt zwischen der Oberseite besagten Randes der Zwischenplatte (6) und der Unterseite des Randabschnitts an der Seite der Brennkammeröffnung (12) besagter Grundplatte (8) gibt.

## Revendications

1. Un joint métallique comprenant une structure laminée de plaques qui est pourvue d'un trou de chambre de combustion (12), ladite structure comportant une plaque de base métallique (8, 38) plate et élastique pourvue d'une nervure raidisseuse entière (16, 36) adjacente au bord (8a, 38a) entourant le trou de chambre de combustion (12), une plaque compensatrice (4) plate, des moyens de compensation (20) s'étendant autour du trou de chambre de combustion (12), ayant une épaisseur plus grande que celle de l'autre partie lorsque le joint métallique est monté, formé par repliage du bord (4a) de la plaque compensatrice (4) du côté du trou de chambre de combustion (12) dans la direction opposée audit trou (12), et une plaque intermédiaire (6) plate,
caractérisé en ce que
la plaque intermédiaire (6, 34) disposée entre la plaque de base (8, 38) et la plaque compensatrice (4) est laminée sur la plaque compensatrice (4),
les moyens de compensation (20) comprennent la plaque de compensation (4), le bord replié (4a) de celle-ci et le bord (8a, 38a) de la plaque de base (8, 38), le bord replié (4a) étant replié de façon qu'il soit déjà en contact entier avec la plaque compensatrice (4) ou avec la plaque intermédiaire (6, 34) avant d'être fixé,
la plaque de base (8, 38) est une plaque extérieure, le bord (8a, 38a) n'étant pas recouvert par le bord replié (4a) de la plaque compensatrice (4), et
la nervure (16, 36) de la plaque de base (8, 38) est disposée à l'extérieur des moyens de compensation (20).

2. Un joint métallique selon la revendication 1, caractérisé en ce que ledit bord replié (4a) de la plaque compensatrice (4) est appliqué sur le bord du côté du trou de chambre de combustion (12) de ladite plaque intermédiaire (6).

3. Un joint métallique selon la revendication 1 ou 2, caractérisé en ce que la plaque de base (8) est laminée sur la plaque intermédiaire (6) de telle façon que le bord (8a) de ladite plaque de base (8) soit disposé au-dessus dudit bord replié et que la nervure raidisseuse (16) soit amenée en contact avec la plaque intermédiaire (6).

4. Un joint métallique selon l'une quelconque des revendications 1 à 3, caractérisé en ce qu'il comporte une deuxième plaque de base (10) comportant une deuxième nervure raidisseuse (18) qui est laminée sur la plaque compensatrice (4), et en ce que les nervures raidisseuses (16, 18) des plaques de base (8, 10) sont formées dans la même direction.

5. Un joint métallique selon l'une quelconque des revendications 1 à 3, caractérisé en ce qu'il est pourvu d'une deuxième plaque de base (10) ayant une deuxième nervure raidisseuse (18), qui est laminée sur la plaque compensatrice (4), et lesdites nervures raidisseuses (16, 18) desdites plaques de base (8, 10) sont formées dans des directions opposées, et en ce que les sommets desdites nervures (16, 18) sont en contact avec ladite plaque intermédiaire (6) et ladite plaque compensatrice (4), de façon à prendre en sandwich lesdites plaques intermédiaire laminée et compensatrice (4, 6).

6. Un joint métallique selon l'une quelconque des revendications 1 à 5, caractérisé en ce que le moyen compensateur (20) est constitué par la plaque compensatrice (4), le bord replié (4a) de celle-ci, le bord (6a) de ladite plaque intermédiaire (6), et les bords desdites plaques de base (8, 10).

7. Un joint métallique selon l'une quelconque des revendications 1 à 6, caractérisé en ce qu'une épaisseur de ladite plaque intermédiaire (6) est inférieure a celle de ladite plaque compensatrice (4), la plaque de base (8) est laminée sur ladite plaque intermédiaire (6) et ledit bord replié (4a) de la plaque compensatrice (4) de façon que la nervure raidisseuse (16) soit dirigée dans la direction opposée à la plaque intermédiaire (6), le bord du trou de chambre de combustion (12) de ladite plaque intermédiaire (6) est distant du bord replié, et il existe un léger intervalle entre la surface supérieure dudit bord de la plaque intermédiaire (6) et la surface inférieure de la partie de bord sur le côté du trou de chambre de combustion (12) de ladite plaque de base (8).
